# FASCICULE DE BREVET EUROPEEN

(11) **EP 1 423 285 B1**
(45) Date de publication et mention de la délivrance du brevet: **14.06.2006**
(21) Numéro de dépôt: 02762427.9
(22) Date de dépôt: 05.08.2002
(51) Int. Cl.: B60C 23/04

(54) **DISPOSITIF DE MONTAGE D'UN CAPTEUR SUR UNE JANTE DE ROUE DE VEHICULE AUTOMOBILE ET PROCEDE DE MONTAGE ASSOCIE**
MONTAGEANORDNUNG VON EINEM SENSOR AUF EINE FELGE EINES FAHRZEUGRADS UND MONTAGEVERFAHREN DAFÜR
DEVICE FOR MOUNTING A SENSOR ON A MOTOR VEHICLE WHEEL RIM AND RELATED MOUNTING METHOD

(30) Priorité: 06.09.2001 FR 0111539
(43) Date de publication de la demande: 02.06.2004
(73) Titulaire: Siemens VDO Automotive S.A.S., 31036 Toulouse Cédex 01 (FR)
(72) Inventeur: LUCE, Dominique, F-31000 Toulouse (FR)
(86) Numéro de dépôt international: PCT/EP2002/008693
(87) Numéro de publication internationale: WO 2003/022603

(56) Documents cités:
- DE-U- 20 015 295
- US-A- 6 055 855

## Description

La présente invention est relative à un dispositif de montage d'un boîtier sur une jante de roue de véhicule automobile et plus particulièrement à un dispositif de montage d'un capteur de pression de pneumatique et au procédé de montage associé.

Il est connu d'intégrer un capteur de pression de pneumatique à la jante de la roue d'un véhicule automobile. Le capteur est généralement intégré à un boîtier lui même fixé à la valve. Le brevet US6055855 suggère par exemple de ménager un logement dans le boîtier du capteur, d'y introduire un écrou et de visser dans cet écrou une valve possédant un filetage adapté. L'ensemble est ensuite solidarisé à la jante via un deuxième écrou. Le positionnement manuel de l'ensemble jante-capteur-valve-écrous est possible tant que lesdits écrous ne sont pas bloqués, par le biais d'un degré de liberté offert au boîtier. Ceci permet une certaine adaptabilité du capteur à différents types de jantes. Cet art antérieur présente cependant l'inconvénient majeur de nécessiter une valve spécifique comportant de nombreux usinages et d'être constitué de nombreux éléments. Il est également très difficile de régler la position du capteur rapidement en raison des deux écrous à manoeuvrer concomitamment. En outre, rien ne garantit que le capteur sera réellement en contact avec la jante, ce qui risque d'engendrer une usure prématurée du capteur et sa destruction potentielle en raison des vibrations que l'absence de contact ne manquerait pas d'induire.

Le problème que la présente invention se propose de résoudre est donc de proposer un mode de montage rapide, économique, facile à mettre en oeuvre et fiable, permettant de plaquer systématiquement un boîtier sur des profils de jantes variés, sans risquer la destruction du capteur en raison d'un mauvais contact ou d'un trop grand porte-à-faux entre le boîtier et la jante.

A cet effet, la présente invention concerne un dispositif de montage d'un capteur sur une jante de roue de véhicule automobile comportant :
- une pièce de traction,
- un boîtier accueillant le capteur, ledit boîtier étant articulé par rapport à la pièce de traction,
- un moyen de blocage en position de la pièce de traction sur la jante une fois le boîtier en contact de la jante,
comme connu de DE 200 15 295 U1.

Le dispositif de l'invention est remarquable en ce que ledit boîtier comporte une première butée adaptée à coopérer par contact avec une première zone de la jante, ladite première butée étant placée d'un coté d'un plan P passant par l'axe d'articulation du boîtier et une deuxième butée placée de l'autre coté dudit plan et adaptée à appuyer sur la jante sous un effort F exercé par la pièce de traction.

Avantageusement, la longueur du bras de levier entre la première butée et l'axe d'articulation du boîtier est faible au regard de la distance entre la seconde butée et ledit axe, de manière à générer une grande variation de la position angulaire du boîtier pour une faible translation de la pièce de traction.

Avantageusement encore la pièce de traction est constituée par la valve de gonflage du pneumatique dont le pied est adapté à coopérer avec le boîtier et le corps est muni d'un écrou assurant la fonction de blocage de la valve sur la jante.

La présente invention concerne également un procédé de montage d'un capteur sur une jante de roue de véhicule automobile caractérisé en ce qu'il consiste à amener un boîtier accueillant le capteur contre la jante sous l'effet d'un couple de basculement généré conjointement par la traction exercée sur la pièce de traction et par la réaction exercée au niveau d'une première butée, incorporée audit boîtier et placée d'un coté du plan passant par l'axe d'articulation du boîtier et perpendiculaire à sa surface supérieure, lorsque ladite butée entre en contact avec la jante, ledit basculement étant arrêté par une seconde butée, incorporée au boîtier, entrant en contact avec la jante, placée de l'autre coté dudit plan.

D'autres caractéristiques et avantages de l'invention apparaîtront à la lecture de la description qui va suivre et à l'examen des dessins annexés dans lesquels:
- la figure 1 est une vue schématique d'un boîtier articulé conforme à l'invention,
- la figure 2 est une vue en coupe d'un premier mode de réalisation du dispositif de montage conforme à l'invention,
- la figure 3 est une vue en coupe d'un second mode de réalisation du dispositif de montage conforme à l'invention,
- la figure 4 est une vue de coté en coupe partielle d'un boîtier muni de sa pièce de traction,
- les figures 5a et 5b représentent deux positions possibles (respectivement avec un angle de basculement faible et un angle de basculement important) du boîtier par rapport à sa pièce de traction,
- les figures 6a et 6b représentent des vues en perspective d'un boîtier, de sa pièce de traction et du joint d'étanchéité respectivement séparément et une fois assemblés, avant montage sur la jante,
- la figure 7 est une vue en perspective d'un boîtier monté sur une jante au moyen du dispositif objet de la présente invention.

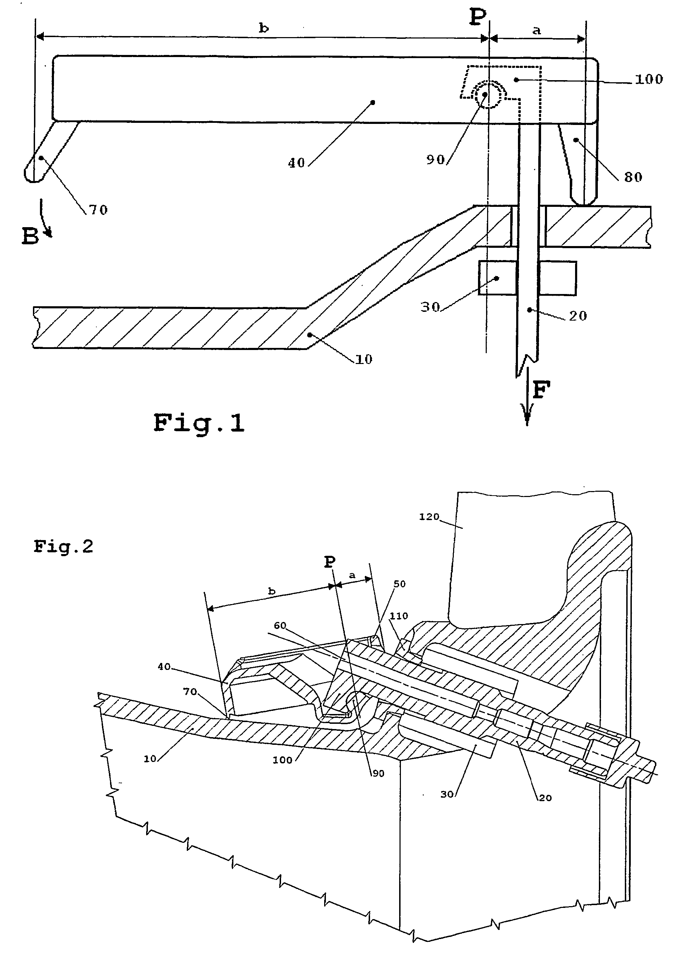

Le dispositif objet de la présente invention est constitué de 3 éléments principaux : une pièce de traction 20, un boîtier 40 accueillant le capteur et articulé par rapport à la pièce de traction 20 et un moyen de blocage de la pièce de traction 30. La figure 1 permet de mieux appréhender comment fonctionne le dispositif. La pièce de traction 20 est introduite dans un orifice de la jante 10, avantageusement le trou de valve mais non nécessairement, et une traction F est appliquée sur cette pièce de manière à approcher le boîtier 40 de la jante 10. Une première butée 80 intégrée au boîtier 40 entre alors en contact avec une première zone de la jante 10 et sous l'effet d'un couple de basculement généré par la force de traction F exercée par la pièce de traction 20 sur le boîtier 40 et la réaction exercée par la jante 10 au niveau de la première butée 80, un basculement (flèche B) du boîtier 40 a lieu et amène la deuxième butée 70 du boîtier 40 au contact de la jante 10, garantissant ainsi un contact étroit entre ledit boîtier 40 et la jante 10. Le moyen de blocage 30 est alors activé et la pièce de traction 20 ainsi bloquée assure un maintien du boîtier 40 en position.

Il est à noter que la distance « a » (bras de levier vis-à-vis de la première butée) est volontairement choisie faible au regard de la distance « b » (bras de levier vis-à-vis de la seconde butée) de manière à permettre une grande variation de la position angulaire du boîtier 40 lors de son basculement, ceci pour une faible course de la pièce de traction 20. Cette course étant faible, elle n'entraîne pas une grande translation de la pièce de traction 20 qui ne sort donc pas ainsi du gabarit de la jante 10 et ne risque donc pas d'être endomagée lors du déplacement du véhicule.

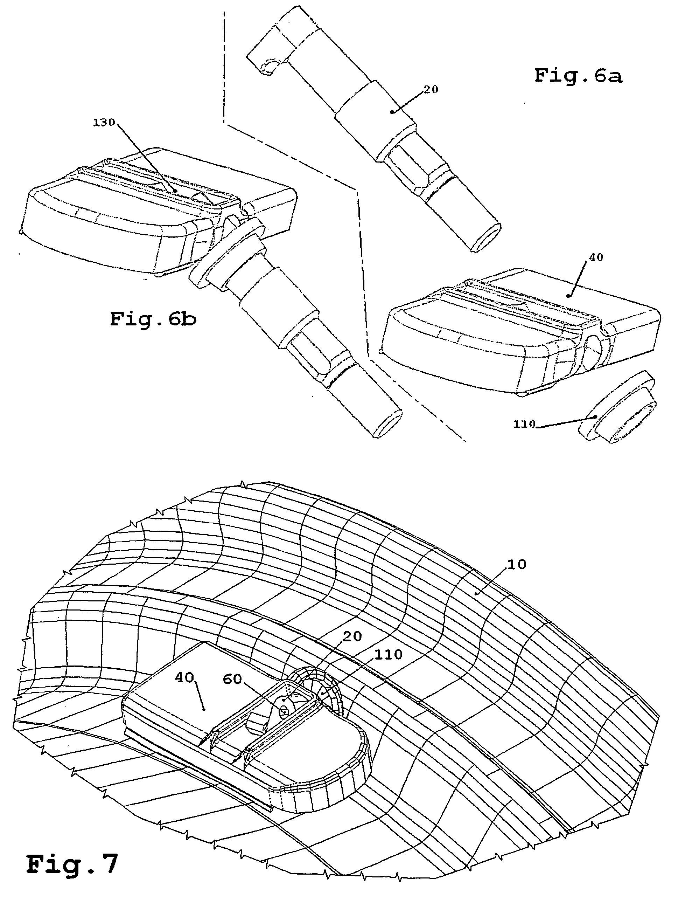

L'illustration du montage se reporte aux figures 2, 4, 6a, 6b, et 7. Dans ces figures, la fonction de pièce de traction 20 est remplie par la valve. Le boîtier 40 est muni d'un logement 130 dans lequel vient se placer la valve. On enfile ensuite le joint d'étanchéité 110 et l'ensemble ainsi constitué est placé à l'intérieur de la jante 10, la valve prenant sa position habituelle. On visse alors l'écrou 30 de valve sur le corps de la valve par l'extérieur de la jante 10, de manière à venir serrer ladite jante 10 entre l'écrou 30 de valve d'une part et le boîtier 40 et le joint d'étanchéité 110 d'autre part. Dès que le boîtier 40, sous l'effet du vissage de l'écrou 30 de valve qui induit une traction F sur la valve, entre en contact avec la jante 10 au niveau de la première butée 80, il amorce automatiquement un basculement qui va l'amener, au fur et à mesure de la poursuite du vissage de l'écrou 30 de valve, au contact de la jante 10 au niveau de sa deuxième butée 70. Le boîtier 40 est alors plaqué solidement contre la jante 10. Le serrage de l'écrou 30 de valve permet de parfaire ce plaquage tout en garantissant l'étanchéité au niveau du joint 110. Il apparaît que le vissage de l'écrou 30 de valve suffit à garantir le plaquage du boîtier 40 de manière simple et automatique.

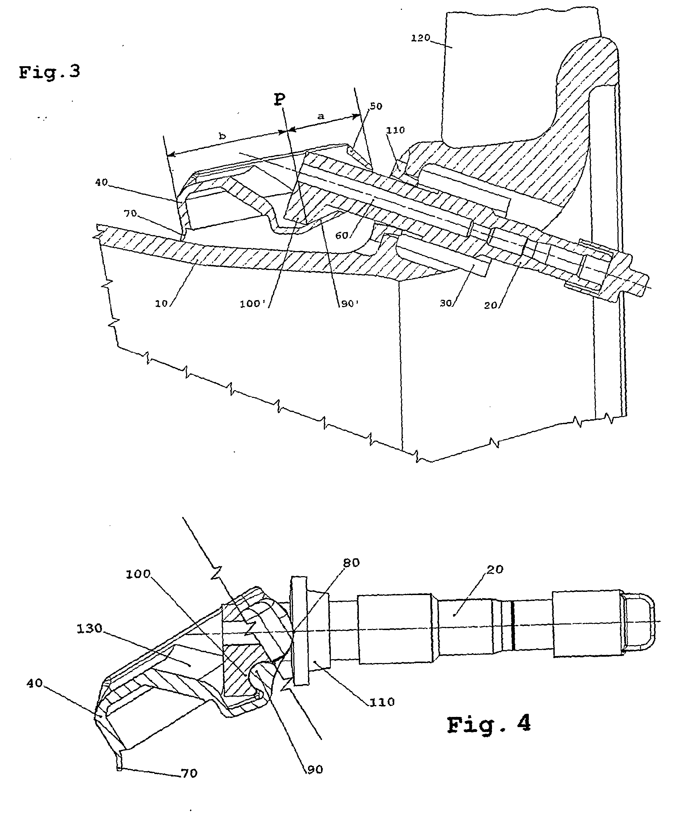

Les Figures 2 et 3 sont deux modes de réalisation conformes à l'invention dans lesquels la pièce de traction 20 est constituée par la valve de gonflage munie d'un pied de valve adapté 100, 100' et où le moyen de blocage de la valve est un écrou 30. A la figure 2, le pied de valve 100 est en forme de crochet qui coopère avec un axe 90 intégré au boîtier 40, alors qu'à la figure 3, le pied de valve est en forme d'ergot 100' et vient appuyer sur un plan incliné 90', ces deux modes de réalisation induisant un basculement du boîtier 40 vers la jante 10. Une variante possible de la présente invention (non représentée) consiste à munir le pied de valve d'un axe venant reposer dans un logement intégré au boîtier, ou tout autre moyen équivalent d'articulation entre le boîtier 40 d'une part et la pièce de traction 20 d'autre part.

Il est à noter que le boîtier 40 est conçu de manière à guider le basculement et à ne l'autoriser que dans un seul sens, celui permettant de plaquer, dans les cas illustrés, le boîtier 40 dans la partie de la jante 10 la plus éloignée du pneumatique 120, afin de protéger le capteur des chocs et manipulations liées au changement de pneumatique. Ceci est rendu possible par la forme même des surfaces coopérantes du boîtier 40 et de la valve, mais également par une butée 50 intégrée audit boîtier qui n'autorise qu'un seul sens de rotation en bloquant le boîtier le cas échéant.

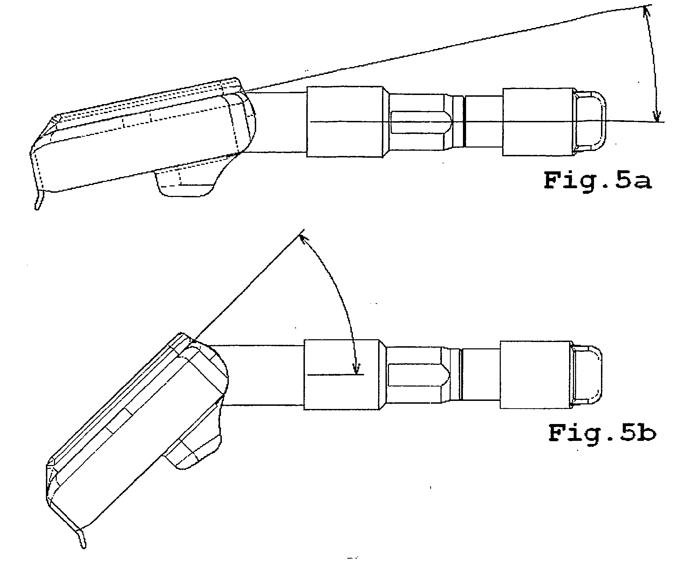

Les figures 5a et 5b visualisent la plage de basculement que peut réaliser un dispositif conforme à l'invention, permettant ainsi au même ensemble de s'adapter à différents profils de jantes 10, sans aucune modification et par simple serrage de l'écrou 30 de valve dans le cas illustré. Comme on peut le remarquer sur les figures 2 et 3, ces positions variées ne nuisent en rien au bon fonctionnement de la valve utilisée ici en tant que pièce de traction 20, le boîtier 40 ne venant pas obstruer l'orifice de passage de l'air 60.

Bien entendu, l'invention n'est pas limitée aux modes de réalisation décrits et représentés qui n'ont été donnés qu'à titre d'exemple. Ainsi, la présente invention s'applique à un dispositif de montage pour tout objet autre qu'un capteur ou bien ailleurs que sur l'orifice de la valve de gonflage, le mode de montage permettant de s'adapter sur tout orifice existant dans la jante 10.

## Revendications

1. Dispositif de montage d'un capteur sur une jante (10) de roue de véhicule automobile comportant :
- une pièce de traction (20),
- un boîtier (40) accueillant le capteur, ledit boîtier (40) étant articulé par rapport à la pièce de traction (20),
- un moyen (30) de blocage en position de la pièce de traction sur la jante (10) une fois le boîtier (40) en contact de la jante (10),
**caractérisé en ce que** ledit boîtier (40) comporte une première butée (80) adaptée à coopérer par contact avec une première zone de la jante (10), ladite première butée (80) étant placée d'un coté d'un plan P passant par l'axe d'articulation du boîtier (40) et une deuxième butée (70) placée de l'autre coté dudit plan et adaptée à appuyer sur la jante (10) sous un effort F exercé par la pièce de traction (20).

2. Dispositif de montage d'un capteur selon la revendication 1 **caractérisé en ce que** la longueur du bras de levier entre la première butée et l'axe d'articulation du boîtier (40) est faible devant la longueur du bras de levier entre la seconde butée et ledit axe, de manière à générer une grande variation angulaire du boîtier (40) pour une faible translation de la pièce de traction (20).

3. Dispositif de montage d'un capteur selon les revendications 1 ou 2 **caractérisé en ce que** le boîtier (40) comporte des moyens (50) adaptés à limiter son basculement selon un seul sens.

4. Dispositif de montage d'un capteur selon les revendications 1 à 3 **caractérisé en ce que** la pièce de traction (20) comporte un crochet (100) coopérant avec un axe (90) placé dans le boîtier (40).

5. Dispositif de montage d'un capteur selon les revendications 1 à 3 **caractérisé en ce que** la pièce de traction (20) comporte un axe coopérant avec un logement correspondant placé dans le boîtier (40).

6. Dispositif de montage d'un capteur selon les revendications 1 à 3 **caractérisé en ce que** la pièce de traction (20) comporte un ergot (100') coopérant avec un plan incliné (90') correspondant placé dans le boîtier (40).

7. Dispositif de montage d'un capteur selon les revendications 1 à 6 **caractérisé en ce que** la pièce de traction (20) est constituée du corps de la valve de gonflage du pneumatique dont le pied est adapté à coopérer avec le boîtier (40).

8. Dispositif de montage d'un capteur selon la revendication 7 **caractérisé en ce que** le moyen de blocage de la valve sur la jante (10) est un écrou (30).

9. Procédé de montage d'un capteur sur une jante (10) de roue de véhicule automobile comportant :
- une pièce de traction (20),
- un boîtier (40) accueillant le capteur, ledit boîtier (40) étant articulé par rapport à la pièce de traction (20),
- un moyen (30) de blocage de la pièce de traction (20) sur la jante (10) en position une fois le boîtier (40) en contact de la jante (10),
**caractérisé en ce qu'**il consiste à amener le boîtier (40) contre la jante (10) sous l'effet du couple de basculement généré conjointement par une traction F exercée sur la pièce de traction (20) et par la réaction exercée au niveau d'une première butée (80) incorporée audit boîtier (40) et placée d'un coté d'un plan P passant par l'axe de la pièce de traction (20), lorsque ladite butée entre en contact avec la jante (10), ledit basculement étant arrêté par une seconde butée (70) incorporée au boîtier (40) entrant en contact avec la jante (10), placée de l'autre coté dudit plan.

## Claims

1. Device for mounting a sensor on a rim (10) of a motor vehicle wheel comprising:
- a tensioning component (20),
- a housing (40) accommodating the sensor, said housing (40) being articulated with respect to the tensioning component (20),
- a means (30) for locking the tensioning component in position on the rim (10) once the housing (40) is in contact with the rim (10),
**characterised in that** said housing (40) has a first stop (80) designed to operate by contact together with a first region of the rim (10), said first stop (80) being located on one side of a plane P passing through the hinge pin of the housing (40) and a second stop (70) located on the other side of said plane and designed to press against the rim (10) under a force F exerted by the tensioning component (20).

2. Device for mounting a sensor according to claim 1, **characterised in that** the length of the lever arm between the first stop and the hinge pin of the housing (40) is small compared with.the length of the lever arm between the second stop and said hinge pin, so as to generate a large angular variation of the housing (40) when the tensioning component is moved only slightly.

3. Device for mounting a sensor according to claims 1 or 2, **characterised in that** the housing (40) has means (50) designed to limit its tilting to just one direction.

4. Device for mounting a sensor according to claims 1 to 3, **characterised in that** the tensioning component (20) has a hook (100) operating together with a hinge pin (90) located in the housing (40).

5. Device for mounting a sensor according to claims 1 to 3, **characterised in that** the tensioning component (20) has a hinge pin operating together with a corresponding pocket located in the housing (40).

6. Device for mounting a sensor according to claims 1 to 3, **characterised in that** the tensioning component (20) has a lug (100') operating together with a corresponding inclined plane (90') located in the housing (40).

7. Device for mounting a sensor according to claims 1 to 6, **characterised in that** the tensioning component (20) is composed of the tyre inflation valve body, the base thereof being designed to operate together with the housing (40).

8. Device for mounting a sensor according to claim 7, **characterised in that** the means for locking the valve on the rim (10) is a nut (30) .

9. Method for mounting a sensor on a rim (10) of a motor vehicle wheel having:
- a tensioning component (20),
- a housing (40) accommodating the sensor, said housing (40) being articulated with respect to the tensioning component (20),
- a means (30) for locking in position the tensioning component (20) on the rim (10) once the housing (40) is in contact with the rim (10),
**characterised in that** it comprises bringing the housing (40) against the rim (10) under the effect of the tilting moment generated jointly by a tension force F exerted on the tensioning component (20) and by the reaction exerted at the first stop (80) attached to said housing (40) and located on one side of a plane P passing through the hinge pin of the tensioning component (20) when said stop comes into contact with the rim (10), said tilting being halted by a second stop (70) attached to the housing (40) coming into contact with the rim (10), said second stop being located on the other side of said plane.

## Patentansprüche

1. Montageanordnung eines Sensors auf einer Felge (10) eines Fahrzeugrads, umfassend:
- ein Zugteil (20),
- ein Gehäuse (40), das den Sensor aufnimmt, wobei das Gehäuse (40) in Bezug auf das Zugteil (20) durch ein Gelenk beweglich ist,
- ein Mittel (30) zum Feststellen des Zugteils in seiner Position auf der Felge (10), sobald das Gehäuse (40) in Kontakt mit der Felge (10) ist,
**dadurch gekennzeichnet, dass** das Gehäuse (40) einen ersten Anschlag (80) umfasst, der so angepasst ist, dass er durch Kontakt mit einem ersten Bereich der Felge (10) zusammenwirkt, wobei der erste Anschlag (80) auf einer Seite einer Ebene P platziert ist, die durch die Gelenkachse des Gehäuses (40) verläuft, und ein zweiter Anschlag (70) auf der anderen Seite der Ebene platziert und so angepasst ist, dass er unter einer Kraft F, die vom dem Zugteil (20) ausgeübt wird, auf die Felge (10) drückt.

2. Montageanordnung eines Sensors nach Anspruch 1, **dadurch gekennzeichnet, dass** die Länge des Hebelarms zwischen dem ersten Anschlag und der Gelenkachse des Gehäuses (40) gering ist gegenüber der Länge des Hebelarms zwischen dem zweiten Anschlag und der Achse, sodass eine große Veränderung des Winkels des Gehäuses (40) bei einer geringen Parallelverschiebung des Zugteils (20) entsteht.

3. Montageanordnung eines Sensors nach Anspruch 1 oder 2, **dadurch gekennzeichnet, dass** das Gehäuse (40) Mittel (50) umfasst, die so angepasst sind, dass sie sein Kippen in nur eine Richtung einschränken.

4. Montageanordnung eines Sensors nach Anspruch 1 bis 3, **dadurch gekennzeichnet, dass** das Zugteil (20) einen Haken (100) umfasst, der mit einer Achse (90) zusammenwirkt, die in dem Gehäuse (40) platziert ist.

5. Montageanordnung eines Sensors nach Anspruch 1 bis 3, **dadurch gekennzeichnet, dass** das Zugteil (20) eine Achse umfasst, die mit einer entsprechenden Aufnahme zusammenwirkt, die in dem Gehäuse (40) platziert ist.

6. Montageanordnung eines Sensors nach Anspruch 1 bis 3, **dadurch gekennzeichnet, dass** das Zugteil (20) eine Nase (100') umfasst, die mit einer entsprechenden geneigten Ebene (90') zusammenwirkt, die im Gehäuse (40) platziert ist.

7. Montageanordnung eines Sensors nach Anspruch 1 bis 6, **dadurch gekennzeichnet, dass** das Zugteil (20) aus dem Körper des Ventils zum Aufpumpen des Reifens besteht, dessen Fuß so angepasst ist, dass er mit dem Gehäuse (40) zusammenwirkt.

8. Montageanordnung eines Sensors nach Anspruch 7, **dadurch gekennzeichnet, dass** das Mittel zum Feststellen des Ventils auf der Felge (10) eine Mutter (30) ist.

9. Montageverfahren eines Sensors auf einer Felge (10) eines Fahrzeugrads, umfassend:
- ein Zugteil (20),
- ein Gehäuse (40), das den Sensor aufnimmt, wobei das Gehäuse (40) in Bezug auf das Zugteil (20) durch ein Gelenk beweglich ist,
- ein Mittel (30) zum Feststellen des Zugteils (20) in seiner Position auf der Felge (10), sobald das Gehäuse (40) in Kontakt mit der Felge (10) ist,
**dadurch gekennzeichnet, dass** es das Gehäuse (40) gegen die Felge (10) führt, unter der Einwirkung des Kippdrehmoments, das sowohl durch einen auf das Zugteil (20) ausgeübten Zug F als auch durch die Gegenwirkung erzeugt wird, die im Bereich eines ersten Anschlags (80) ausgeübt wird, der am Gehäuse (40) angebracht und auf einer Seite einer Ebene P platziert ist, die durch die Achse des Zugteils (20) verläuft, wenn der Anschlag in Kontakt mit der Felge (10) kommt, wobei das Kippen durch einen zweiten Anschlag (70) aufgehalten wird, der am Gehäuse (40) angebracht ist, das in Kontakt mit der Felge (10) kommt, der auf der anderen Seite der Ebene platziert ist.
